# EUROPÄISCHE PATENTSCHRIFT

(11) **EP 2 726 308 B1**
(45) Veröffentlichungstag und Bekanntmachung des Hinweises auf die Patenterteilung: **27.04.2016**
(21) Anmeldenummer: 12725314.4
(22) Anmeldetag: 30.05.2012
(51) Int. Cl.: B60J 5/04, B29C 44/18, B29C 70/34, B29C 70/86, B29K 75/00, B29C 44/08, B29K 701/12, B60R 13/08

(54) **AUSSENMODUL MIT EINER AUSSENBEPLANKUNG FÜR EINE MODULAR AUFGEBAUTE GEHÄUSEKOMPONENTE SOWIE DIE MODULAR AUFGEBAUTE GEHÄUSEKOMPONENTE SELBST UND VERFAHREN ZUR HERSTELLUNG DES AUSSENMODULS**
EXTERIOR MODULE WITH AN EXTERIOR PANELLING FOR A MODULARLY CONSTRUCTED HOUSING COMPONENT AND THE MODULARLY CONSTRUCTED HOUSING COMPONENT ITSELF, AND METHOD FOR PRODUCING THE EXTERIOR MODULE
MODULE EXTÉRIEUR MUNI D'UN REVÊTEMENT EXTÉRIEUR POUR UN ÉLÉMENT BOÎTIER DE CONCEPTION MODULAIRE, ÉLÉMENT DE BOÎTIER DE CONCEPTION MODULAIRE ET PROCÉDÉ DE FABRICATION DUDIT MODULE EXTÉRIEUR

(30) Priorität: 30.06.2011 DE 102011106151
(43) Veröffentlichungstag der Anmeldung: 07.05.2014
(73) Patentinhaber: Daimler AG, 70327 Stuttgart (DE)
(72) Erfinder: BRYMERSKI, Wojciech, 70806 Kornwestheim (DE); FÜTTERER, Michael, 71157 Hildrizhausen (DE); REESE, Eckhard, 21641 Apensen (DE)
(74) Vertreter: JENSEN & SON
(86) Internationale Anmeldenummer: PCT/EP2012/002298
(87) Internationale Veröffentlichungsnummer: WO 2013/000533

(56) Entgegenhaltungen:
- EP-A2- 0 060 562
- DE-A1-102005 009 179
- US-A- 5 172 519

## Beschreibung

Die Erfindung betrifft ein tragendes Außenmodul eines Kraftfahrzeugs mit einer Außenbeplankung für eine modular aufgebaute Gehäusekomponente sowie die modular aufgebaute Gehäusekomponente, bei der es sich insbesondere um eine Tür- oder Verkleidungskomponente eines Kraftfahrzeugs handelt, und ein Verfahren zur Herstellung des Außenmoduls.

Modulare Kraftwagentüren bzw. Karosserieverkleidungen weisen in der Regel einen dreiteiligen Aufbau auf und umfassen ein Innenmodul, an welches außenraumseitig ein Außenmodul und innenraumseitig ein Türinnenbelag angebracht ist. Das Außenmodul kann selbsttragend ausgebildet sein, um ein besseres Handling und eine einfachere Montage des Moduls zu erreichen, weist aber üblicherweise keine unmittelbare Tragfunktion der Fahrzeugtür auf.

Erfüllen die Türinnenverkleidung und die Beplankung des Außenmoduls in erster Linie kaum strukturelle Aufgaben, dienen in den meisten Fällen ausschließlich die Verstärkungsbereiche des Innerimoduls und des Türrahmens bzw. Außenmoduls als Crashstrukturen. Dabei kann es sich um einen diagonal verlaufenden Seitenaufprallschutz handeln, wie er in der DE 10 2005 009 179 A1 beschrieben ist. Dort wird eine Kraftwagentür offenbart, die ein geringeres Gewicht aufweist, in der Montage leichter zu handhaben ist und zusätzlich eine höhere Crashstabilität aufweist. Diese Kraftwagentür weist eine dem Außenmodul entsprechende Außenschale mit einer Außenbeplankung und eine Innenschale auf, die durch Türschmalseiten bildende Verstärkungen gebildet ist. An der Innenschale ist innenraumseitig mindestens ein Trägerbauteil für Funktionsbauteile angeordnet. Dabei sind die Türschmalseiten der Innenschale und das Trägerbauteil zu einem einzigen, dem Innenmodul entsprechenden Modulbauteil zusammengefasst, das mit einer separaten Türinnenverkleidung versehen ist.

Die DE 10 2004 011 250 B3 befasst sich mit der lösbaren Befestigung einer Kunststoffaußenbeplankung am Türrahmen mittels Schienen und Haken. In der Regel wird die Außenbeplankung von Karosseriebauteilen in modernen Kraftwagentüren nicht in die Steigerung der Crashperformance einbezogen und benötigt wegen ihrer geringen Steifigkeit zusätzliche Versteifungselemente. Dazu wird in der DE 10 2008 034 038 A1 eine besonders gewichtsgünstige und steife Verstärkungsstruktur für eine Seitentür eines Kraftwagens beschrieben. Diese weist ein Türträgerteil für die Türaußenbeplankung und ein Verstärkungselement zur Erhöhung der Beulsteifigkeit der Tür in Hochrichtung zumindest über eine Teilhöhe der Tür auf. Allerdings werden diese Versteifungselemente nachträglich an die Rahmenstruktur des Außenmoduls angebracht. Nötig sind diese, um einerseits die Beulsteifigkeit zur Vermeidung von Bagatellschäden und zur Erzielung einer Class-A-Oberfläche zu verbessern und zudem die Schwingempfindlichkeit der großen Fläche zu verringern, um akustische Effekte wie z. B. Dröhnen zu verhindern.

Die DE 10 2007 042 418 A1 legt ein selbsttragendes Außenmodul, das aus einer auf einen tragenden Rahmen aufgebrachten Beplankung besteht, dar. Die Tragstruktur eignet sich für eine einfache Montage der Module, trägt aber nicht als Strukturbauteil zur Steigerung der Crashperformance bei.

Grundsätzlich ist der modulare Aufbau von Kraftwagentüren eine gängige Methode, um den Handhabungs- und Montageaufwand zu reduzieren. Die Außenbeplankung umfasst hierbei meist nur ein Türaußenblech ohne strukturelle Aufgaben als Bestandteil der Fahrzeugkarosserie:
Bekannt sind aus der DE 10 2007 024 163 A1 modular aufgebaute Karosserieteile, bei denen ein aus Kunststoff gefertigtes Beplankungsteil auf einer Tragstruktur aus Stahl oder Leichtmetall angebracht wird. Die Tragstruktur trägt dabei zu einer höheren Steifigkeit und Festigkeit bei und ermöglicht dadurch die Class-A-Oberflächentauglichkeit der Kunststoffbeplankung.

Aus der DE 202 20 552 U1 ist eine Kraftfahrzeugtür mit einer Außenbaugruppe und mit einem Aggregateträger bekannt. Die Außenbaugruppe weist eine Türaußenhaut auf und bildet eine äußere Designfläche der Kraftfahrzeugtür und der Aggregateträger ist auf der einem Fahrzeuginnenraum zugeordneten Seite der Außenbaugruppe angeordnet und mit der Außenbaugruppe verbindbar; er trägt elektrische und/oder mechanische Funktionskomponenten der Kraftfahrzeugtür. Die Außenbaugruppe weist im Bereich ihrer äußeren Ränder Verstärkungsbereiche auf, so dass diese eine hinreichende Eigensteifigkeit besitzt und als separates, von dem Aggregateträger unabhängiges Türelement handhabbar ist, das erst in einem abschließenden Montageschritt mit dem Aggregateträger zur Herstellung der kompletten Fahrzeugtür verbunden wird.

Aus der US 5172519 ist eine Anordnung für das Verschließen eines Staufachs in der Außenwand eines Wohnmobils bekannt, welches einen mehrschichtigen Aufbau aufweist.

Im genannten Stand der Technik ist die Beplankung nicht als tragendes Bauteil in das Karosseriekonzept eingebunden.

Ausgehend hiervon ist es die Aufgabe der vorliegenden Erfindung, ein tragendes Außenmodul, das die Außenbeplankung aufweist, zu schaffen, das eine Verbesserung der Crashperformance bietet, akustischen und optischen Anforderungen gerecht wird und zur thermischen Isolierung und Gewichtsreduzierung beiträgt.

Diese Aufgabe wird durch ein Außenmodul eines Kraftfahrzeugs mit den Merkmalen des Anspruchs 1 gelöst.

Eine weitere Aufgabe besteht in der Schaffung einer modular aufgebauten Gehäusekomponente, in der entsprechend das tragende Außenmodul zum Einsatz kommt. Diese Aufgabe wird durch die Gehäusekomponente mit den Merkmalen des Anspruchs 8 gelöst.

Ferner wird die Herstellung des Außenmoduls eines Kraftfahrzeugs mit reduzierten Investitions- und Herstellkosten, geringen Maßtoleranzen und kurzen Zykluszeiten durch das Verfahren mit den Merkmalen des Anspruchs 10 ermöglicht.

Weiterbildungen der Gegenstände und des Verfahrens sind in den jeweiligen Unteransprüchen ausgeführt.

Eine erste Ausführungsform des Außenmoduls mit Außenbeplankung für eine modular aufgebaute Gehäusekomponente weist einen Mehrschichtaufbau auf, der eine innere und eine äußere Deckschicht umfasst. Auf der äußeren Deckschicht ist eine Außenhaut angeordnet, die die Außenbeplankung bildet. Dabei ist die innere Deckschicht eine thermoplastische FVK-Deckschicht, die auf der von der äußeren Deckschicht weg weisenden Seite Versteifungselemente aufweist, wodurch das Außenmodul als tragendes Bauteil ausgebildet wird. So kann es beispielsweise in ein modulares Karosserieelement integriert werden und ermöglicht dabei nicht nur eine hohe Designfreiheit und Funktionsintegration sondern auch die Anpassung der crashbeaufschlagten Beplankung auf das Fahrzeugkonzept.

Bei der Gehäusekomponente, für die das Außenmodul vorgesehen ist, kann es sich daher um eine modular aufgebaute Tür oder ein Verkleidungsbauteil eines Kraftfahrzeugs oder auch eines Gerätes wie eines Haushaltsgerätes handeln.

Zwar kann das Außenmodul bestimmter Gehäusekomponenten lediglich den beschriebenen Schichtaufbau aufweisen, vorzugsweise wird der Mehrschichtaufbau des Außenmoduls zwischen der äußeren Deckschicht und der inneren Deckschicht einen Strukturkern aufweisen, der aus einem Schaummaterial wie einem Polyurethan bestehen kann.

Alternativ dazu oder zusätzlich kann als Strukturkern eine Wabenstruktur vorgesehen sein. Der Strukturkern kann über die Fläche des Außenmoduls eine gleich bleibende oder eine variable Dicke aufweisen.

Durch diesen Sandwichaufbau mit leichtem Kern kann eine Gewichtsreduzierung des Außenmoduls und damit der Gehäusekomponente erzielt werden. Das Außenmodul als Strukturbauteil ermöglicht die Steigerung der Crashperformance, indem die Aufprallenergie flächig auf den Träger verteilt wird. Ferner dient der Strukturkern der Steifigkeitserhöhung, wobei der Verlauf des Eindrückwiderstands gezielt über den Eindrückweg durch Materialauswahl, Schichtaufbau und Funktionselemente definierbar ist.

In einer weiteren Ausführungsform des erfindungsgemäßen Außenmoduls ist nicht nur die innere Deckschicht eine thermoplastische FVK-Deckschicht sondern auch die äußere Deckschicht. Alternativ zu einer thermoplastischen FVK-Deckschicht als äußerer Deckschicht kann diese allein oder zusammen mit der Außenhaut durch ein vorgeformtes Metallblech, insbesondere Aluminiumblech, oder ein vorgeformtes Kunststoffteil oder durch eine Kunststofffolie oder eine SMC-Schicht oder eine Kombination daraus gebildet sein.

Ferner ist auch die Anordnung eines solchen vorgeformten Metall- bzw. Aluminiumblechs, oder Kunststoffteils oder einer Kunststofffolie oder einer SMC-Schicht oder einer Kombination der genannten auf einer äußeren thermoplastischen FVK-Deckschicht denkbar.

In einer bevorzugten Ausführungsform wird die Außenhaut durch eine IMC-Schicht, bevorzugt aus einem Polyurethan, gebildet. Allerdings kann die Außenhaut auch durch eine (oder mehrere) vor oder nach Herstellung des Mehrschichtaufbaus aufgebrachte Lackschicht(en) gebildet werden.

Geeigneter Weise können die thermoplastischen FVK-Deckschichten einfach aus Organoblechen gebildet werden, bei denen es sich um plattenförmige endlosfaserverstärkte Thermoplasthalbzeuge handelt, die eine Verstärkungsfaseranordnung in einer thermoplastischen Kunststoffmatrix aufweisen. Als Verstärkungsfasern kommen vorzugsweise Kohlefasern, Glasfasern, Aramidfasern, Metallfasern oder Kombinationen davon in Frage. Die verwendeten Faseranordnungen weisen häufig orientierte Fasern auf und umfassen Gelege, Gewebe, Netze, Gestricke etc. Als thermoplastischer Matrixkunststoff können beispielsweise ein Polyamid (PA), Polypropylen (PP), Polycarbonat (PC), Polyphenylensulfid (PPS), Polyetheretherketon (PEEK), Polyethylenterephthalat (PET), Polybutylenterephthalat (PBT) oder Polyethylen mit hoher Dichte (HDPE) verwendet werden. werden.

Bei den Versteifungselementen, die die innere Deckschicht aufweist, handelt es sich erfindungsgemäß um Verstärkungsrippen, die an die innere Deckschicht angespritzt sind. Ein dazu geeigneter Spritzkunststoff ist mit dem thermoplastischen Matrixkunststoff der inneren Deckschicht kompatibel, vorzugsweise ist der Spritzkunststoff der gleiche wie der thermoplastische Matrixkunststoff. Die zwischen den angespritzten Rippen bestehenden Zwischenräume können ausgeschäumt sein, auch dazu kann ein Polyurethan verwendet werden. Ferner können als Versteifungselemente Sicken in die innere Deckschicht eingebracht sein oder die innere Deckschicht kann wellige Bereiche aufweisen, die der Verbesserung der Crashperformance dienen.

Die eventuell bei der Ausführung mit einer äußeren thermoplastischen FVK-Deckschicht auftretenden Einfallstellen nach Verarbeitung der Organobleche können mit einer Schicht aus dem thermoplastischen Matrixkunststoff ausgeglichen werden, die auf der Seite der äußeren thermoplastischen FVK-Deckschicht vorgesehen ist, die der Außenhaut zugewandt ist.

An den Randbereichen können die äußere und die innere Deckschicht des Außenmoduls durch Umfalzen, Verschweißen oder Umspritzen verbunden sein.

Neben den erfindungsgemäßen Versteifungselementen kann die innere Deckschicht Durchbrüche und/oder angespritzte Konturen und/oder Kanten von Randbereichen, Halterungs- und/oder Anbindungselementen aufweisen, insbesondere letztere zur Anbindung des Außen moduls an ein Innenmodul der modular aufgebauten Gehäusekomponente.

Eine erfindungsgemäße modular aufgebaute Gehäusekomponente besteht aus einem Außenmodul nach einer der beschriebenen Ausführungsformen, das eine Außenbeplankung für die Gehäusekomponente bildet, und aus einem mit dem Außenmodul verbundenen Innenmodul.

Zur Verbindung von Innen- und Außenmodul kann dabei eine Klebstoffnaht vorgesehen sein. Alternativ oder zusätzlich kann die innere Deckschicht des Außenmoduls randseitig einen einschubartigen Absatz zum Einschieben in das Innenmodul aufweisen, zusätzlich oder alternativ eine oder mehrere Federn und/oder Stifte, die in entsprechenden Nuten oder Ausnehmungen des Innenmoduls aufgenommen werden können.

Ein erfindungsgemäßes Verfahren zur Herstellung eines Außenmoduls kann unter Verwendung eines einzigen Werkzeugs durchgeführt werden, das aus zwei Werkzeughälften besteht, von denen die eine zur Ausbildung der Beplankung auf einer Außenseite des Außenmoduls und die andere zur Ausbildung einer Innenseite des Außenmoduls vorgesehen ist. Das Werkzeug verfügt über ein spezielles Angusssystem für verschiedene Kunststoffe bzw. Kunststoffkomponenten, das die Durchführung des Verfahrens gestattet. Dabei werden zunächst die innere und die äußere Deckschicht entsprechend der inneren und äußeren Außenmodulkonturen vorgeformt und dann in die entsprechende Werkzeughälfte eingelegt. Zumindest die innere Deckschicht wird durch eine thermoplastische FVK-Deckschicht bereitgestellt. Nach dem Schließen des Werkzeugs wird ein schaum bildendes Material zwischen die Deckschichten mittels des Angusssystems des Werkzeugs injiziert und dadurch der Strukturkern als Schaumkem gebildet. Ebenfalls in dem Werkzeug während desselben Schließzyklus' werden die Versteifungselemente an der inneren Deckschicht sowie die Außenhaut an der äußeren Deckschicht mittels des Angussystems erzeugt.

Zur Ausbildung der Versteifungselemente an der inneren Deckschicht weist die entsprechende Werkzeughälfte entsprechende Formhohlräume auf, in die mittels einer Angusseinrichtung des Systems beispielsweise zur Ausbildung von Rippen ein geeigneter Kunststoff eingespritzt wird. Der mit dem Matrixkunststoff der thermoplastischen FVK-Deckschicht kompatible bzw. gleichartige Kunststoff gestattet eine stoffschlüssige Anbindung der angespritzten Rippen.

Die Erzeugung der Außenhaut an der Deckschicht erfolgt vorzugsweise mittels In-Mould-Coating in dem Werkzeug, wobei das Werkzeug teilweise geöffnet wird, und zwar soweit es die Schichtdicke der Außenhaut erfordert, woraufhin die äußere Deckschicht insbesondere mit einem Polyurethan beschichtet wird, das mittels einer Angusseinrichtung des Angusssystems in den zuvor gebildeten Spalt injiziert wird.

Das Vorformen der Deckschichten kann im Falle der thermoplastischen FVK-Deckschichten einfach durch Erwärmen, insbesondere mittels Infrarotstrahlung erfolgen, wobei die erwärmten thermoplastischen FVK-Deckschichten formbar werden und somit beispielsweise mittels formangepasster Greifer vorgeformt werden können. Das Halten der Deckschichten durch die Greifer kann durch Erzeugen eines Unterdrucks erfolgen, ebenso wie das Fixieren der Deckschichten beim Einlegen in die Werkzeughälften ebenfalls durch Erzeugen eines Unterdrucks erfolgen kann.

Das zur Herstellung verwendete "One-Shot"-Verfahren reduziert die Investitions- und Herstellkosten, garantiert geringe Maßtoleranzen und ermöglicht durch den Einsatz eines thermoplastischen Matrixsystems kurze Zykluszeiten.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich eine schematische Darstellung einer Ausführungsform der Erfindung.

Dabei zeigt:
- Fig. 1: eine perspektivische Ansicht einer modular aufgebauten Fahrzeugtür mit Außenmodul, Innenmodul und Innenverkleidung,
- Fig. 2: eine Innenansicht eines Außenmoduls nach Stand der Technik,
- Fig. 3: schematische Seitenschnittansichten durch zwei Fahrzeugtüren aus verbundenen Außen- und Innenmodulen,
- Fig. 4: eine Teilquerschnittansicht durch ein Außenmodul,
- Fig. 5: eine schematische Querschnittansicht durch einen erfindungsgemäßen Schichtaufbau des Außenmoduls,
- Fig. 6: eine perspektivische Innenansicht des Außenmoduls und eine vergrößerte Detailansicht,
- Fig. 7: eine schematische Querschnittansicht durch eine Fahrzeugtür aus verbundenem Außen- und Innenmodul,
- Fig. 8: schematische Seitenschnittansichten durch zwei unterschiedlich gefügte Außenmodul-Randbereiche,
- Fig. 9: eine schematische Querschnittansicht durch die äußere Deckschicht, die eine Schicht zum Ausgleich von Einfallstellen aufweist,
- Fig. 10: eine schematische Seitenschnittansicht des Werkzeugs zur Herstellung des Außenmoduls während einer ersten Phase mit einer ersten Angusseinrichtung,
- Fig. 11: eine schematische Seitenschnittansicht des Werkzeugs zur Herstellung des Außenmoduls während einer zweiten Phase mit einer zweiten Angusseinrichtung,
- Fig. 12: ein Ablaufschema eines erfindungsgemäßen Herstellungsverfahrens,
- Fig. 13: eine skizzierte Darstellung einer die Fasern des Organoblechs durchdringenden Injektionsdüse,
- Fig. 14: ein schematisches Anlagenkonzept mit Peripherieeinheiten und dem Werkzeug zur Durchführung des Verfahrens zur Herstellung des Außenmoduls.

Die vorliegende Erfindung betrifft ein Außenmodul für eine modular aufgebaute Gehäusekomponente wie beispielsweise eine tragende Karosserie-Außenbeplankung und deren Herstellungsverfahren. Eine erfindungsgemäße Karosserie-Außenbeplankung bezieht sich insbesondere auf modular aufgebaute Fahrer-, Beifahrer-, hintere Seiten- und/oder Hecktüren, Dachelemente, Stoßfänger, Kotflügel, Heckklappen, Motorhauben, Motorverkleidungen, Kompressor-/Aggregatabdeckungen; des weiteren sind die erfindungsgemäßen Außenmodule generell für modular aufgebaute Gehäuse geeignet, etwa für Haushaltsgeräte wie Staubsauger.

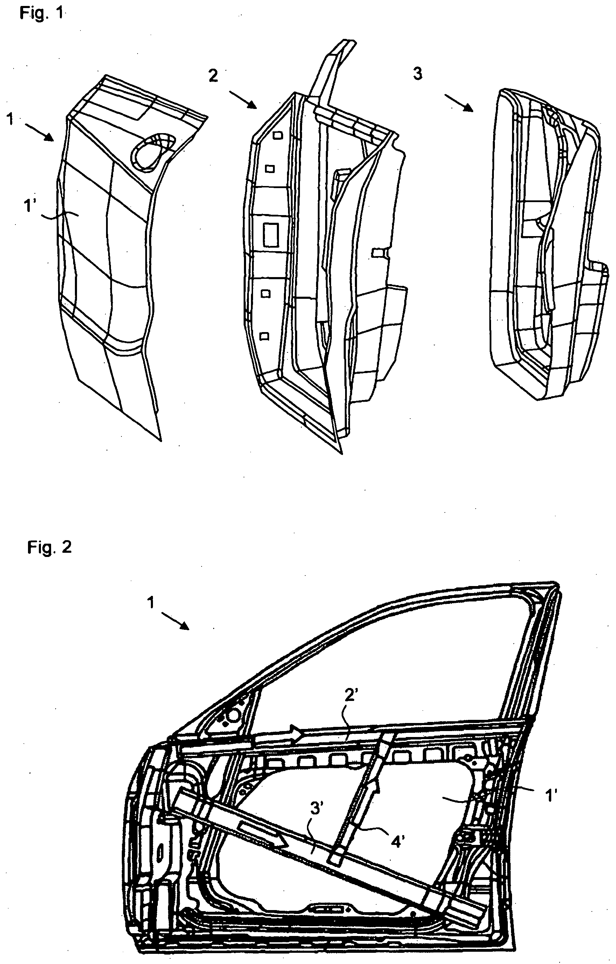

Das hierzu beschriebene Außenmodul, beispielhaft in den Figuren ein Fahrzeugtür Außenmodul 1, besteht aus einem mehrschichtigen Aufbau aus thermoplastischen FVK-Deckschichten, die aus einem Organoblech gebildet werden, das beispielsweise netzartig angeordnete Aramidfasern umfasst, Versteifungselementen, welche entweder auf die innere FVK-Deckschicht als Rippen angespritzt oder direkt in diese als Sicken eingebracht werden können, einer Kemstruktur etwa aus einem PUR-Schaum oder einer Wabenstruktur und einer vorzugsweise im Werkzeug beispielsweise mittels In-Mould-Coating (IMC) aufgetragenen Außenhaut. Dieser Aufbau ermöglicht wegen der hohen Designfreiheit und Funktionsintegration die Anpassung der crashbeaufschlagten Beplankung auf das Fahrzeugkonzept durch die Konfiguration der Materialien, Halbzeuge und Geometrien. Die Beplankung kann so als tragendes Bauteil optimal in ein modulares Karosserieelement integriert werden; dieses kann wie Fig. 1 zeigt, aus einer Innenverkleidung 3, einem Außenmodul 1 (Beplankung) und einem Innenmodul 2 (Türträger) aufgebaut sein. Der Türträger 2 nimmt hierbei zusätzlich zu dem Außen modul 1 und der Innenverkleidung 3 Funktionsaggregate, beispielsweise Fensterheber, Lautsprecher, etc. auf.

Das Außenmodul 1 bzw. die Beplankung wird durch ihren Aufbau akustischen und optischen Anforderungen hinsichtlich einer Class A-Oberfläche und der Gestaltungsfreiheit gerecht. Die Sandwichbauweise der Beplankung trägt zudem wesentlich der im Zuge der Elektromobilität an Bedeutung gewinnenden thermischen Isolierung und Gewichtsreduzierung bei. Ferner bietet der Aufbau hervorragende NVH-Eigenschaften, wobei mit NVH (Noise, Vibration, Harshness) die als Geräusch hörbaren und/oder als Vibration spürbaren Schwingungen in Kraftfahrzeugen bezeichnet werden.

Da sich bei einem Seitenaufprall und Seitencrash (z.B. Seitenaufprall nach Federal Motor Vehicle Safety Standard, FMVSS, 214) die Beplankung als erstes Fahrzeugelement in Kontakt mit dem Impact-Körper befindet, bietet die erfindungsgemäße tragende Außenbeplankung 1 als energieabsorbierendes Element eine Verbesserung der Crashperformance. Das zur Herstellung verwendete One-Shot-Verfahren reduziert die Investitions- und Herstellkosten, garantiert geringe Maßtoleranzen und ermöglicht durch den Einsatz eines thermoplastischen Matrixsystems kurze Zykluszeiten.

Fig. 1 zeigt einen modularen Aufbau einer Kraftfahrzeugtür, bestehend aus einem Innenmodul bzw. einem Türträger 2, an das/den sich außenraumseitig ein Außenmodul 1 mit Beplankung und innenraumseitig ein Türinnenbelag 3 anschließt. Ein Außenmodul 1 nach dem Stand der Technik ist in Fig. 2 dargestellt. Da im Stand der Technik der Türinnenbelag 3 und die Beplankung 1' in erster Linie kaum strukturelle Aufgaben erfüllen; dienen in den meisten Fällen ausschließlich die Verstärkungsbereiche des Innenmoduls und des Türrahmes 2' als Teil des Außenmoduls 1 als Crashstrukturen. Diese crashrelevanten Strukturen werden durch einen in etwa diagonal verlaufenden Seitenaufprallschutz 3' verstärkt. Zur Erhöhung der Beulsteifigkeit der Außenbeplankung 1' weist das Außenmodul hier zusätzlich ein Versteifungselement 4' auf.

Die Erfindung zeichnet sich dadurch aus, ein Beplankungsteil 1 als tragende Struktur in die Fahrzeugkarosserie zu integrieren. Die Herstellung der FVK-Sandwichstruktur erfolgt in einem One-Shot-Verfahren, d.h. alle Prozesse finden in einem Werkzeug statt.

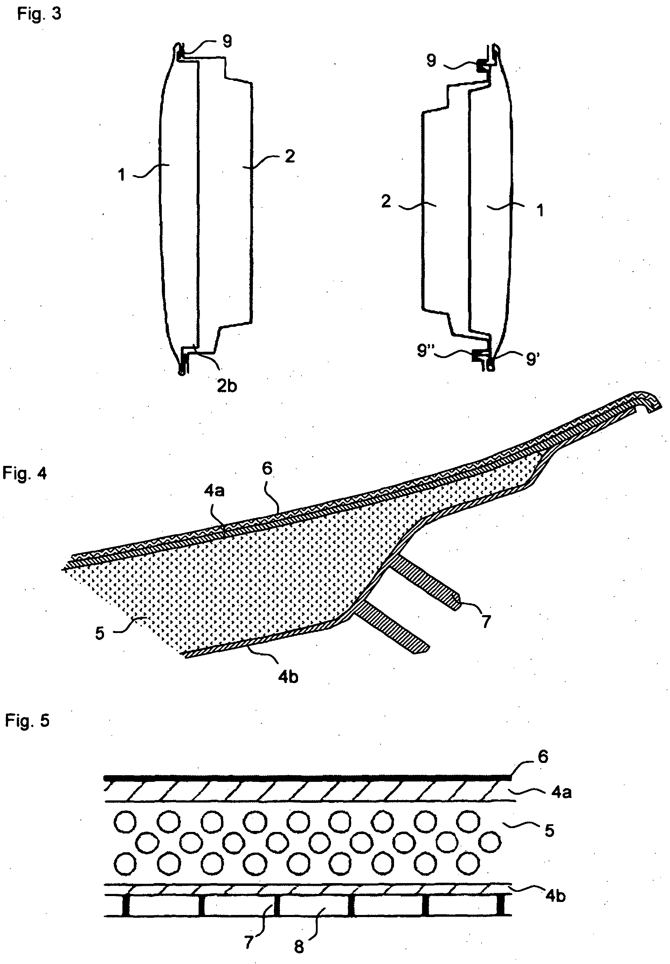

Der Mehrschichtaufbau des erfindungsgemäßen Außenmoduls 1, das die Außenbeplankung 1' für eine modular aufgebaute Gehäusekömponente wie hier einer Fahrzeugtür bereitstellt, umfasst, wie insbesondere in Fig. 4 und 5 zu sehen ist, eine innere Deckschicht 4b und eine äußere Deckschicht 4a, auf der die Außenhaut 6 angeordnet ist, die die Außenbeplankung 1' bildet. Beide Deckschichten 4a,4b sind thermoplastische FVK-Deckschichten, wobei die innere Deckschicht 4b auf der von der äußeren Deckschicht 4a weg weisenden Seite als Versteifungselemente Rippen 7 aufweist.

Die thermoplastischen FVK-Deckschichten werden dabei aus Organoblechen gefertigt.

Unter "Organoblechen" werden plattenförmige endlosfaserverstärkte Thermoplasthalbzeuge verstanden, die für Bauteile mit hohen Festigkeiten und geringem Gewicht eingesetzt werden. Organobleche lassen sich thermoformen und ermöglichen kurze Prozesszyklen und sind außerdem gut schweißbar. Im Gegensatz zu metallischen Blechen entfällt bei der Verwendung von Organoblechen der Korrosionsschutz. Erhältliche Organobleche beispielsweise der Firma TPone, Zeesen, Deutschland, weisen als Verstärkungsfasern Glas-, Kohle- und Aramidfasern auf, als Matrixsysteme werden dort PA6, PA12, PPS, PEEK, PET, PBT, HDPE angeboten.

Organobleche können dabei aus speziellen Faseranordnungen, die Fasern in definierten Orientierungen aufweisen, eingebettet in der Thermoplastmatrix, bestehen. So kann es sich bei den Faseranordnungen um Gewebe, Gelege, Gestricke etc. handeln. Neben den genannte Verstärkungsfasern und Matrixsystemen kommen selbstverständlich auch alle anderen gängigen Verstärkungsfasertypen, z. B. Keramikfasern, Metallfasern, Naturfasern andere Polymerfasern in Frage; auch können verschiedenartige Verstärkungsfasern in einer Faseranordnung kombiniert sein. Die genannten Matrixsysteme sind nur beispielhaft und in keiner Weise beschränkend zu verstehen.

Die Verwendung einer thermoplastischen Matrix reduziert zudem im Vergleich zu Duromeren die Zykluszeiten. Der Sandwichaufbau kombiniert dabei eine hohe gewichtsspezifische Steifigkeit sowohl beim Crash als auch im Schwingungsverhalten mit einer guten thermischen und akustischen Isolation. Im Zuge der Elektromobilität spielen diese Aspekte zur Erhöhung der Reichweite, des Fahrkomforts und der Kostenreduzierung eine Schlüsselrolle. Zudem isoliert der aufgeführte Lagenaufbau den Innenraum zusätzlich, indem die Schallabstrahlung der großflächigen Beplankung durch die hohe Steifigkeit verringert wird und die Umgebungsgeräusche durch den Schaumkern absorbiert werden.

Das erfindungsgemäße Außenmodul 1 eignet sich besonders für den Einsatz in modular aufgebauten Karosserieelementen. Diese können entsprechend der in Fig. 1 gezeigten Kraftfahrzeugtür aufgebaut sein. Der Aufbau und die Anzahl der Einzelkomponenten im Karosserieelement können dabei entsprechend dem Anforderungsprofil variieren. Durch das einfache Handling und die schnelle Montage des erfindungsgemäßen Beplankungsmoduls 1 werden die Herstellungskosten nochmals deutlich reduziert.

Das Beplankungsmodul 1 ragt im montierten Zustand über die Kontur des Trägermoduls 2 hinaus, um die Trennebene zwischen diesen zu verdecken. In dieser Trennebene kann, wie in Fig. 3 dargestellt, zur Montage des Beplankungsmoduls 1 an den Träger 2 eine umlaufende Klebeverbindung 9 in den Randbereichen aufgetragen sein, etwa mit einem Sikaflex®-Klebstoff, Sika Deutschland GmbH, Stuttgart. Diese Klebeverbindung 9 kann bei einer nötigen Reparatur der innen liegenden Aggregate entfernt werden. Um die Beplankung 1 nach der Reparatur wieder an den Träger 2 zu Fügen, kann erneut ein Kleberand 9 aufgetragen werden.

Wegen der guten Formbarkeit des Organoblechs im warmen Zustand und der damit erhaltenen Gestaltunabhängigkeit der inneren und äußeren Deckschicht 4a,4b bei Sandwichbauteilen, kann eine hohe Designfreiheit (v.a. der äußeren Deckschicht 4a) garantiert werden und der Übergangsbereich zwischen Beplankungsmodul 1 und Träger 2 in unterschiedlicher Weise ausgestaltet werden. So kann die innere Deckschicht 4b der Beplankung 1 als eine Art Einschub 2b in den Türträger 2 eingeschoben werden (Fig. 3, links), wobei die Klebung 9 im Randbereich erfolgt. Die Einleitung der durch die Beplankung 1 aufgenommenen Kraft in den Türträger 2 kann zudem durch ein Nut- und Federprinzip 9',9" verbessert werden (Fig. 3, rechts), wobei hier die innere Deckschicht 4b der Beplankung 1 im Randbereich als Feder 9' ausgebildet ist, die in eine korrespondierende Nut 9" im Randbereich des Innenmoduls 2 eingreift. Die umlaufende Klebstoffverbindung 9 kann dabei in die Nut-Feder-Verbindung integriert sein, wobei zur Montage der Klebstoff 9 in die Nut 9" oder auf die Feder 9' aufgetragen werden kann. Selbstverständlich kann auch anders als dargestellt die innere Deckschicht 4b Nuten aufweisen, in die Federn des Innenmoduls eingreifen können.

Wird der komplette Schichtaufbau der vorliegenden Erfindung genutzt, liegt der in Fig. 4 und 5 dargestellte Schichtaufbau des Faserverbundwerkstoff-Sandwichbauteils vor. Dieser besteht aus zwei Deckschichten 4a und 4b aus Organoblechen, einem Strukturkern 5 (z. B. aus PUR-Schaum), einer beispielsweise im IMC-Verfahren aufgetragenen Außenhaut (z. B. PUR-Lack) 6 und hinterspritzten Versteifungsrippen 7 mit lokal ausgeschäumten Zwischenräumen 8. Der Schichtaufbau kann, wie Fig. 4 zeigt, in seiner Dicke entlang dem Außenmodul 1 variieren. So kann der zwischen den Deckschichten 4a und 4b gesandwichte Schaumkem 5 von einer maximalen Dicke von beispielsweise 15 mm auf 5 mm abnehmen, wobei im Randbereich gar kein Schaumkemmaterial zwischen den Deckschichten 4a,4b vorliegt. Die äußere Deckschicht 4a, die ggfs. mit Matrixkunststoff verstärkt sein kann, s. u., ist hier aus einem Organoblech mit 0,8 mm Dicke gebildet, auf das die die Außenhaut 6 bildende Lackschicht mit einer Schichtdicke von 1 mm aufgetragen ist. Das Organoblech für die innere Deckschicht 4b ist hier 1,2 mm dick. So können die Deckschichten 4a,4b sich nicht nur hinsichtlich der Dicke unterscheiden, sondern eventuell auch hinsichtlich der Konfiguration, des Gewebes bzw. Geleges sowie hinsichtlich der Faser- bzw. Matrixmaterialien.

Je nach mechanischen, optischen und akustischen Anforderungen kann der beschriebene Schichtaufbau des Beplankungsmoduls 1 variieren. Ferner kann die Dichte des Schaumkerns 5 variiert werden oder der Kern komplett entfallen (z. B. für Radkästen). Auch das Material der Außenhaut 6 und deren Anbringung auf/an der äußeren Deckschicht 4a kann variieren. So kann die Außenhaut 6 außer als IMC-Schicht auch als vorgeformtes Alu-Außenblech oder als SMC-Außenschicht aufgeklebt oder als Einleger direkt auf den Sandwichverbund aufgebracht werden, was später noch erläutert wird.

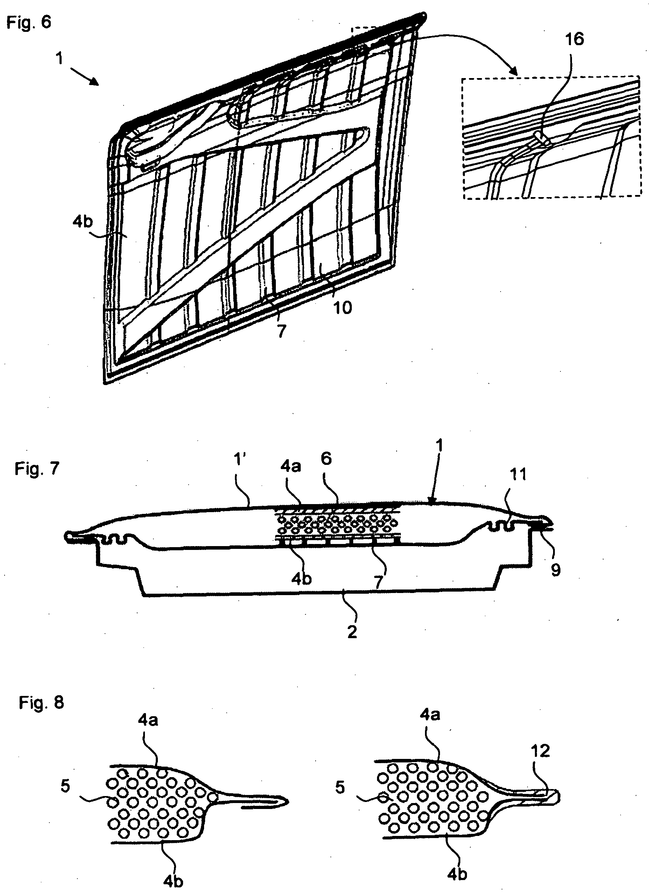

Verstärkungen auf dem inneren Organoblech 4b in Form von Sicken 10 bzw. Rippen 7 verleihen dem Außenmodul 1 zusätzliche Steifigkeit (Fig. 6). Der in der vergrößerten Detailansicht zu sehende Stift 16 dient der verbesserten Halterung bzw. Positionierung bei der Montage mit dem Innenmodul 2.

Auch das Ausformen von z. B. welligen Bereichen 11 der inneren Deckschicht 4b (vgl. Fig. 7) und der Einsatz eines flexiblen Klebers 9 sind Möglichkeiten, um im Crashfall eine gewisse Nachgiebigkeit zu erzielen, die für die Kraftaufnahme über den gesamten Eindrückweg nötig ist, der beim Türeindrückwiderstand-Test FMVSS 214 445 mm beträgt, und die Strukturintegrität zu erhalten, ohne dabei die Designfreiheit der Außenhaut 1' negativ zu beeinflussen. Im Falle eines Seitencrashs ermöglicht die in der Erfindung beschriebene tragende Beplankung 1 im Gegensatz zu herkömmlichen Seitenaufprallschutzelementen, die die Kraft nur punktuell in die Seitenwände leiten, die flächige Kraftweitergabe über das Innenmodul (Träger) 2 an die Seitenwände (A/B/C-Säulen). Die welligen Bereiche 11, die eine geeignete Deformationsstrukturgeometrie aufweisen, stellen verformungsfähige Bereiche dar, die in das Außenmodul 1 integriert sind.

Der Kontakt zwischen den beiden Deckschichten 4a,4b kann in den Randbereichen durch Umfalzen (Fig. 8, links) oder Umspritzen/In-mould-Assembly 12 (Fig. 8, rechts) oder Verschweißen der Organobleche hergestellt werden, um den optischen und mechanischen Anforderungen gerecht zu werden. Die Randbereiche können dadurch passgenau gefertigt werden und gleichen mögliche Ungenauigkeiten beim Drapieren des Organoblechs aus. Die Versiegelung der Trennebene zwischen den beiden flächigen Deckschichten 4a,4b verhindert zudem Eindringen von Feuchtigkeit in die Kemstruktur 5.

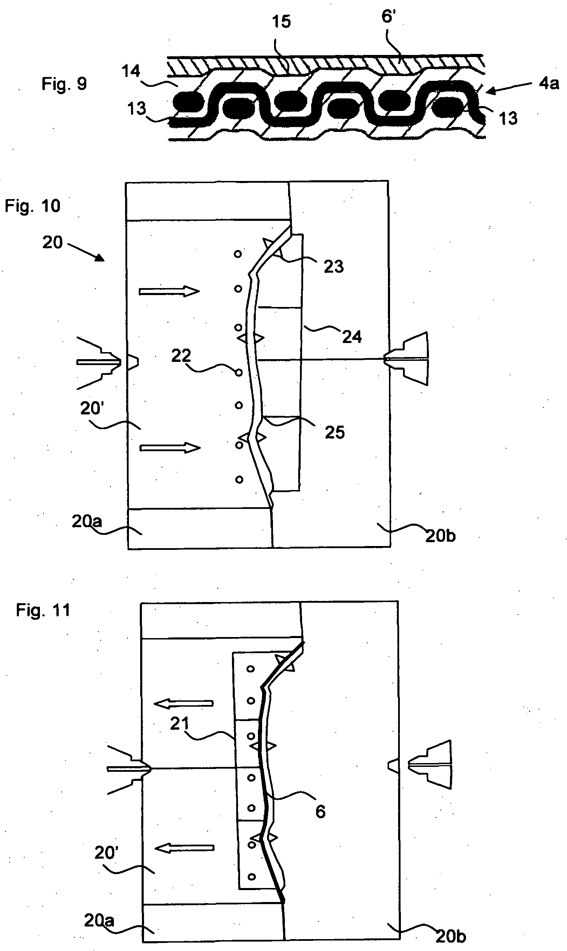

Eine weitere Schlüsselstelle bei großflächigen Kunststoffteilen ist die Einstellung der Wärmeausdehnung und des damit zusammenhängenden Spaltmaßes. Das anisotrope Verhalten von Faserverbundwerkstoffen kann bei der vorliegenden Beplankung 1 konstruktiv durch geeignete Werkstoffkombinationen und entsprechende Lagenaufbauten ausgeglichen werden, um geringe Toleranzen einzuhalten. Die Außenhaut 6 kann im Werkzeug direkt in Wagenfarbe aufgetragen werden. Um das Abzeichnen der Faserstruktur auf der Beplankungsaußenseite 6 zu verhindern und die Class-A-Oberfläche herzustellen, kann, wie in Fig. 9 zu sehen, eine Oberflächenschicht 6' zum Ausgleichen der Einfallstellen 15, die auf der Organoblechoberseite bei der Verarbeitung entstehen, aufgebracht werden.

Diese Ausgleichschicht 6', die die Class-A-Oberfläche bereitstellt, kann durch eine Schicht aus Matrixmaterial gebildet werden, indem zum Beispiel bereits bei der Herstellung des äußeren Organoblechs 4a auf dessen oberste Faserlage die zusätzliche Matrixschicht 6' aufgetragen wird. Auf diese kann dann nach dem Herstellen des Beplankungsmoduls 1 direkt im Negativformwerkzeug der PUR-Außenlack 6 appliziert werden.

Eine weitere Variante zur Schaffung der Class-A-Oberfläche ist das Überfluten der äußeren Deckschicht 4a des Sandwichverbundes nach der Modulherstellung mit einer etwa 1 mm starken PUR-Schicht. Hierfür werden die Werkzeughälften ein wenig auseinander gefahren und der Lack in den sich ergebenden Hohlraum eingebracht. Der Spalt kann alternativ über das Zurückziehen eines Kerns (Fig. 11) erfolgen oder durch ein Würfeletagenwerkzeug. Die so hergestellte Oberfläche 1' kann bei Bedarf (etwa für eine Metalliclackierung) anschließend nochmals überlackiert werden.

Außerdem kann die Außenhaut 6 durch eine Folie in Wagenfarbe realisiert werden. Diese ist in der Lage Unebenheiten auszugleichen oder kann in Kombination mit den vorigen Varianten kombiniert werden. Die Kunststofffolie kann entweder bereits vor der Sandwichherstellung in das Werkzeug eingelegt sein oder das vorgefertigte Beplankungsmodul kann anschließend übergezogen werden.

Ferner kann auf das äußere Organoblech 4a oder alternativ direkt auf den Strukturkern 5 eine bereits vorgeformte Außenhaut 6 aus Kunststoff aufgeklebt werden. Diese kann bereits vorher in Wagenfarbe lackiert sein oder anschließend lackiert werden.

Eine weitere Variante bezieht sich darauf, dass die Außenhaut 6 aus einem bereits vorgeformten Aluminiumblech besteht, welches als Einleger im Werkzeug direkt bei der Sandwichherstellung mit den restlichen Schichten (zwei Schichten aus Organoblech 4a,b oder entsprechend voriger Variante auch nur das innere Organoblech 4b möglich) verbunden wird oder auch im Anschluss an die Formteilherstellung auf diese geklebt wird. Die Aufbringung der Lackschicht kann wie bei den anderen Varianten vor dem Einlegen, per IMC oder nach der Formteilherstellung realisiert werden.

Schließlich kann die Außenhaut 6 durch eine im SMC-Verfahren herstellte Schicht realisiert werden, wobei die Verbundherstellung entsprechend der Aluminiumblech-Variante erfolgt. Die Lackierung kann wie bereits bei den anderen Varianten aufgeführt im Voraus, IMC oder im Nachhinein geschehen.

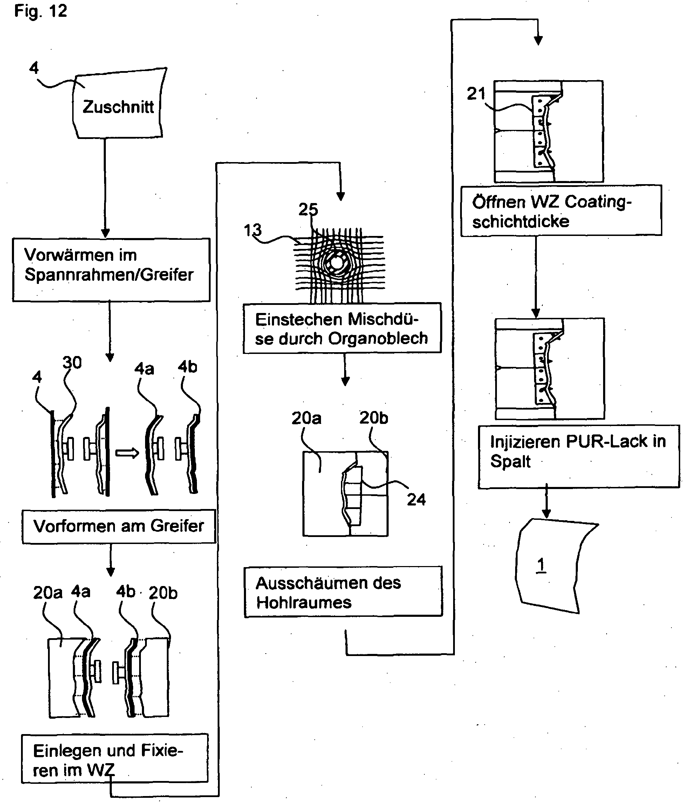

Der Herstellungsprozess findet in einem einzigen Werkzeug 20 (Fig. 10,11) statt und reduziert dadurch die Herstellungs- und Investitionskosten. Der nach Fig. 12 beschriebene Prozess gliedert sich in drei grundlegende Abschnitte:
- Einlegen der vorgeformten Organobleche 4a,b in beide Werkzeughälften 20a,b,
- nach dem Schließen des Werkzeugs 20 wird durch eine 2K-Angusseinrichtung 24 (Fig. 10) mittels Kaskadensteuerung der Strukturkern 5 aus PUR-Schaum beispielsweise mit 500 bar injiziert und die Rippen 7 oder Kanten beispielsweise mit einem Polyamid angespritzt.
- Abschließend wird die PUR-Außenhaut 6 mit der IMC-Angusseinrichtung 21 (Fig. 11) aufgetragen, nachdem ein Werkzeugeinsatz 20' der Werkzeughälfte 20a zurückverfahren wurde und somit ein Spalt zur Bildung der Außenhaut 6 geöffnet wurde.

Im ersten Prozessschritt werden Organobleche 4 zugeschnitten und in einem Spannrahmen oder nach Aufnahme durch einen Greifer 30 bis kurz unter den Schmelzpunkt der Kunststoffmatrix erwärmt. Die erwärmten Organobleche 4 werden am Greifer 30 vorgeformt, so dass die vorgeformten Organobleche 4a,4b entsprechend der inneren und äußeren Deckschichten 4a,4b in beide Werkzeugseiten 20a,b eingelegt und in diesen fixiert werden können. Anschließend wird das Werkzeug geschlossen. Bei den Greifern 30 handelt es sich um verfahrbare Vakuumsauger, auch die Werkzeughälften 20a,b weisen Vakuumsauger 23 (vgl. Fig. 10) zur Fixierung der Organobleche 4a, 4b auf.

Im zweiten Prozessschritt werden nach Schließen der Werkzeughälften 20a,b durch das erwärmte Organoblech, das die innere Deckschicht 4b bildet, die Mischkopf-Sprühdüsen 25 faserschonend in den von den beiden Organoblechen 4a,4b gebildeten Hohlraum eingestochen (die Anzahl und Position der Düsenelemente (Fig. 10) kann an die Bauteilgeometrie und das einzuspritzende Volumen angepasst werden). Das eingespritzte 2K-Kemmaterial schäumt im Werkzeug 20 auf und presst die Deckschichten 4a,4b flächig an die Oberflächen der Werkzeughälften 20a,b. Auch ein physikalisch aufschäumendes PUR kann als Kernmaterial 5 eingesetzt werden, indem das im Extruder komprimierte PUR sich beim Injizieren in das Werkzeug 20 schlagartig entspannt. Die 2K-Angusseinrichtung 24 kann über einen Heißkanal und Nadelverschlussdüsen verfügen.

Im Anschluss werden im selben Werkzeug 20 Halterungen/Anbindungen 16 (Fig. 6) für den Montage-/Handling-Prozess oder auch Verrippungen 7 in der Positivwerkzeugform 20b an das innere Organoblech 4b beispielsweise mit einem Polyamid angespritzt und die Konturen der Randbereiche und Durchbrüche des inneren Organoblechs 4b (z.B. im Bereich des Türgriffs) mit einer mehrere Millimeter breiten Kante maßgenau umspritzt (In-Mould-Assembly 12). Aufgrund der Erwärmung der Organobleche bis kurz unter den Schmelzpunkt der Kunststoffmatrix verbinden sich die angespritzten Komponenten stoffschlüssig mit der Deckschicht, insbesondere wenn es sich bei dem Spritzkunststoff um den gleichen oder einen gleichartigen Kunststoff wie den Matrixkunststoff handelt. Die Negativwerkzeugform 20a wird nach dem Öffnen des Werkzeugeinsatzes 20' zu einem Spalt in der Schließebene entsprechend der Coatingschichtdicke in einem kontinuierlichen Prozess mit einer Oberflächenmasse überflutet, um Unebenheiten auszugleichen. Dazu weist das Werkzeug 20 eine Angusseinrichtung 21 in der Werkzeug hälfte 20a auf, die zur Bildung der IMC-Außenhaut 6 vorgesehen ist. Auch die Angusseinrichtung 21 des Werkzeugangusssystems weist eine Kaskadensteuerung auf. Nach Injektion des PUR-Lackes in den Spalt wird das fertige Außenmodul 1 erhalten. Somit ist die Herstellung des Außenmoduls 1 in einem One-Shot-Verfahren realisierbar.

In Fig. 10 und Fig. 11 ist zur besseren Übersicht jeweils nur eine der Angusseinrichtungen 21,24 des Angusssystems eingezeichnet, und zwar jeweils das aktive. Schließlich weist das Werkzeug 20 noch eine variotherme, induktive Werkzeugtemperierung 22 zur Steuerung der Aushärtungsprozesse der injizierten Kunststoffe und der Erstarrung des Matrixkunststoffs der Organobleche auf.

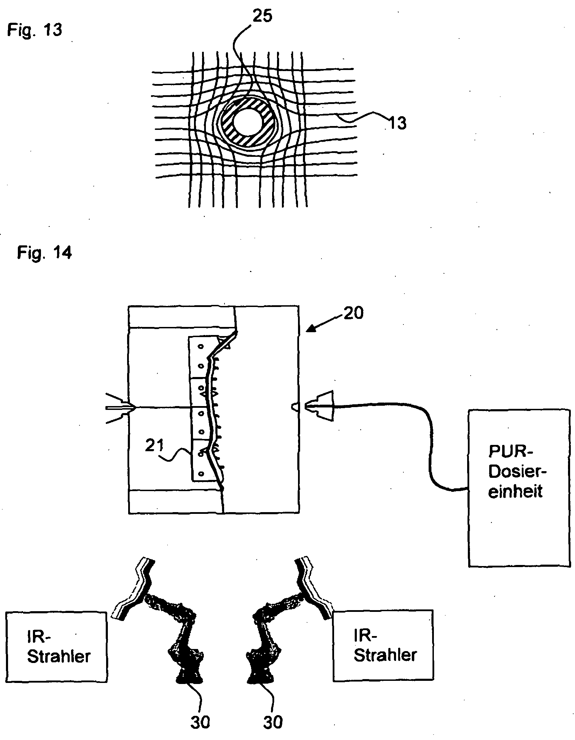

Fig. 13 verdeutlicht die faserschonende Injektion des Schaummaterials zwischen die Deckschichten, wobei die Mischdüse 25 das Fasergewebe 13 des Organoblechs durchdringt.

Die in Fig. 14 skizzierte Spritzgießanlage verfügt neben dem Werkzeug 20 über drei Peripherieeinheiten: Einer PUR-Dosiereinheit für das Hohlraumschäumen zur Bildung des Strukturkerns 5, einer In-Mould-Coating-Einrichtung 21 zur Bildung der Außenhaut 6 sowie einer Heiz- und Handhabungseinheit für die Organobleche, bestehend aus Infrarotstrahlern und Greifern 30, die von Mehrachsrobotern bewegt werden. Eine Zeitspanne zwischen dem Aufwärmen der Organobleche durch die Infrarotstrahler und dem Einlegen in das Werkzeug 20 beträgt dabei maximal 7 Sekunden, so dass das Organoblech formbar bleibt.

Die Erfindung verbindet die Vorteile der Reduktion von Montage,- Funktion- und Herstellkosten durch das One-Shot-Verfahren zur Herstellung des selbsttragenden Außenmoduls mit erzielbaren geringen Fertigungstoleranzen durch In-Mould-Assembly und kein Zwischenöffnen des Werkzeugs. Durch den Sandwichaufbau mit leichtem Kern trägt das erfindungsgemäße Außenmodul zu der Gewichtsreduzierung bei, wobei durch die Beplankung als Strukturbauteil die Crashperformance gesteigert wird, indem die Energie weit außen flächig auf den Träger verteilt wird. Die Modulbauweise erfordert nur einen geringen Handlingsaufwand, während durch die geringe Schwingungsempfindlichkeit/ NVH durch die Steifigkeitserhöhung ein Komfortgewinn erzielt wird. Das erfindungsgemäße Außenmodul bietet eine hohe Designfreiheit und stellt eine Class-A-Oberfläche sicher.

Funktionselemente wie Dehnungswellen sind wegen der Designunabhängigkeit konstruktiv in die inneren Deckschicht integrierbar, und der Verlauf des Eindrückwiderstands ist gezielt über den Eindrückweg durch Materialauswahl, Schichtaufbau, Funktionselemente definierbar. Eine weitere Kosteneinsparung kann durch Funktionsintegration erreicht werden.

Die Modulbauweise stellt ein einfaches Reparaturkonzept zur Verfügung, wobei das erfindungsgemäße Herstellungsverfahren kurze Zykluszeiten und höhere Stückzahlen realisierbar macht. Das Außenmodul ist dabei hochwertig, da die Beplankung nicht nachgiebig ist.

## Patentansprüche

1. Außenmodul (1) eines Kraftfahrzeugs mit einer Außenbeplankung (1') für eine modular aufgebaute Gehäusekomponente,
**dadurch gekennzeichnet, dass**
das Außenmodul (1) einen Mehrschichtaufbau aufweist, der eine innere Deckschicht (4b) und eine äußere Deckschicht (4a) mit einer darauf angeordneten Außenhaut (6), die die Außenbeplankung (1') bildet, und einen Strukturkern (5) aus einem Schaummaterial zwischen der äußeren Deckschicht (4a) und der inneren Deckschicht (4b) umfasst,
wobei zumindest die innere Deckschicht (4b) eine thermoplastische Deckschicht aus faserverstärktem Kunststoff (FVK-Deckschicht) ist, die zumindest auf der von der äußeren Deckschicht (4a) weg weisenden Seite Versteifungselemente (7,10,11) aus Rippen (7) aufweist, **dadurch gekennzeichnet, dass** die Rippen (7) aus thermoplastischem Matrixkunstoff sind, und dass die Versteifungselemente (7,10,11) an die innere Deckschicht (4b) angespritzte Rippen (7) sind, wobei der Spritzkunststoff der Rippen (7) aus einem mit dem thermoplastischen Matrixkunststoff der inneren Deckschicht (4b) kompatiblen Kunststoff ausgewählt ist und insbesondere der gleiche wie der thermoplastische Matrixkunststoff ist.

2. Außenmodul (1) nach Anspruch 1,
**dadurch gekennzeichnet, dass**
die Gehäusekomponente eine modular aufgebaute Tür oder ein Verkleidungsbauteil eines Kraftfahrzeugs oder eines Gerätes, insbesondere eines Haushaltsgerätes ist, und wobei
der Strukturkern (5) aus einem Schaummaterial aus Polyurethan gebildet ist und der eine gleich bleibende oder eine variable Dicke aufweist.

3. Außenmodul (1) nach Anspruch 1 oder 2,
**dadurch gekennzeichnet, dass**
die äußere Deckschicht (4a) durch eine thermoplastische FVK-Deckschicht gebildet ist, oder dass
die äußere Deckschicht (4a) und/oder die Außenhaut (6) durch ein vorgeformtes Metallblech, insbesondere Aluminiumblech, oder ein vorgeformtes Kunststoffteil oder durch eine Kunststofffolie oder eine SMC-Schicht oder eine Kombination daraus gebildet sind/ist, und/oder
die Außenhaut (6) eine IMC-Schicht (6), bevorzugt aus einem Polyurethan ist, oder zumindest eine Lackschicht umfasst.

4. Außenmodul (1) nach zumindest einem der Ansprüche 1 bis 3,
**dadurch gekennzeichnet, dass**
die zumindest eine thermoplastische FVK-Deckschicht (4a,4b) aus Organoblech gebildet ist, die eine Verstärkungsfaseranordnung (13) in einer thermoplastischen Kunststoffmatrix (14) aufweist, wobei
- die Verstärkungsfasern Kohlefasern, Glasfasern, Aramidfasern, Metallfasern oder Kombinationen davon umfassen,
- die Faseranordnungen (13) ein Gelege, ein Gewebe, ein Netz, ein Gestrick umfassen, und
- der thermoplastische Matrixkunststoff (14) ein Polyamid, Polypropylen, Polycarbonat, Polyphenylensulfid, Polyetheretherketon, Polyethylenterephthalat, Polybutylenterephthalat, Polyethylen mit hoher Dichte ist.

5. Außenmodul (1) nach zumindest einem der Ansprüche 3 bis 4,
**dadurch gekennzeichnet, dass**
auf einer der Außenhaut (6) zugewandten Seite der äußeren thermoplastischen FVK-Deckschicht (4b) eine Schicht (6') aus dem thermoplastischen Matrixkunststoff vorgesehen ist.

6. Außenmodul (1) nach zumindest einem der Ansprüche 1 bis 5,
**dadurch gekennzeichnet, dass**
die äußere und die innere Deckschicht (4a,4b) an einem Randbereich des Außenmoduls (1) durch Umfalzen, Verschweißen oder Umspritzen verbunden sind.

7. Außenmodul (1) nach zumindest einem der Ansprüche 1 bis 6,
**dadurch gekennzeichnet, dass**
die innere Deckschicht (4b) Durchbrüche und/oder angespritzte Konturen und/oder Kanten von Randbereichen, Halterungs- und/oder Anbindungselementen (2b, 9',16) zur Anbindung des Außenmoduls (1) an ein Innenmodul (2) der modular aufgebauten Gehäusekomponente aufweist.

8. Modular aufgebaute Gehäusekomponente mit einem Außenmodul (1) mit Außenbeplankung (1') und einem Innenmodul (2),
**dadurch gekennzeichnet, dass**
das Außenmodul (1) ein Außenmodul (1) nach zumindest einem der Ansprüche 1 bis 7 ist, das mit dem Innenmodul (2) verbunden ist.

9. Gehäusekomponente nach Anspruch 8,
**dadurch gekennzeichnet, dass**
die Verbindung zwischen dem Außenmodul (1) und dem Innenmodul (2) durch eine Klebstoffnaht (9) erfolgt und/oder
die innere Deckschicht (4b) zur Verbindung randseitig einen einschubartigen Absatz (2b) zum Einschub in das Innenmodul (2) und/oder
die innere Deckschicht (4b) zur Verbindung randseitig zumindest eine Feder (9') und/oder einen Stift (16) zur Aufnahme in einer entsprechenden Nut (9") oder Ausnehmung des Innenmoduls (2) aufweist.

10. Verfahren zur Herstellung eines Außenmoduls (1) eines Kraftfahrzeugs nach zumindest einem der Ansprüche 2 bis 8, unter Verwendung eines Werkzeugs (20), das aus zwei Werkzeughälften (20a,20b) besteht, wobei eine Werkzeug hälfte (20a) zur Ausbildung der Beplankung (1') auf einer Außenseite des Außenmoduls (1) und eine Werkzeughälfte (20b) zur Ausbildung einer Innenseite des Außenmoduls (1) vorgesehen ist, und wobei das Werkzeug (20) über ein Angusssystem (21,24) verfügt,
umfassend die Schritte:
- Vorformen der inneren und der äußeren Deckschichten (4a,4b) entsprechend der inneren und äußeren Außenmodulkonturen wobei zumindest die innere Deckschicht (4b) durch eine thermoplastische FVK-Deckschicht (4b) bereitgestellt wird,
- Einlegen der vorgeformten Deckschichten (4a,4b) in die entsprechenden Werkzeughälften (20a,20b),
- Fixieren der Deckschichten (4a,4b) beim Einlegen in die Werkzeughälften (20a,20b) durch Erzeugen eines Unterdrucks,
- Schließen des Werkzeugs (20),
- Injizieren eines schaumbildenden Materials zwischen die Deckschichten (4a,4b) durch das Angusssystem (21,24) des Werkzeugs (20) und Bilden des Strukturkerns (5),
- Erzeugen der Außenhaut (6) durch teilweises Öffnen des Werkzeugs (20) und Beschichten der äußeren Deckschicht (4a) mittels des Angusssystems (21,24).
- Erzeugen der Versteifungselemente (7,10,11) an der inneren Deckschicht (4b) oder sowohl an der inneren Deckschicht (4b), als auch an der Außenhaut (6) an der äußeren Deckschicht (4a) durch Anspritzen von Rippen (7) mit dem thermoplastischen Matrixkunststoff in dem Werkzeug (20) mittels des Angussystems (21,24).

11. Verfahren nach Anspruch 10,
**dadurch gekennzeichnet, dass**
zum Vorformen der Deckschichten (4a,4b) ein Erwärmen insbesondere mittels Infrarotstrahlung und Halten der Deckschichten (4a,4b) durch formangepasste Greifer (30) erfolgt, wobei das Halten der Deckschichten (4a,4b) an den Greifern (30) durch Erzeugen eines Unterdrucks erfolgt.

## Claims

1. Exterior module (1) of a motor vehicle, with an exterior cladding (1') for a modularly constructed housing component,
**characterised in that**
the exterior module (1) has a multi-layer structure comprising an inner cover layer (4b) and an outer cover layer (4a) with an outer skin (6) located thereon, which outer cover layer (4a) forms the exterior cladding (1'), and further comprising a structural core (5) of a foam material between the outer cover layer (4a) and the inner cover layer (4b), wherein at least the inner cover layer (4b) is a thermoplastic cover layer made of fibre-reinforced plastic (FRP cover layer), which has, at least on the side remote from the outer cover layer (4a), reinforcing elements (7, 10, 11) represented by ribs (7),
**characterised in that**
the ribs (7) are made of a thermoplastic matrix plastic material, and **in that** the reinforcing elements (7, 10, 11) are ribs (7) applied to the inner cover layer (4b) by injection moulding,
wherein the injection moulding material of the ribs (7) is selected from plastic materials compatible with the thermoplastic matrix plastic material of the inner cover layer (4b) and is in particular the same as the thermoplastic matrix plastic material.

2. Exterior module (1) according to claim 1,
**characterised in that**
the housing components are a modularly constructed door or a panel component of a motor vehicle or an appliance, in particular of a domestic appliance, and wherein
the structural core (5) is made of a polyurethane foam material and has a constant or a variable thickness.

3. Exterior module (1) according to claim 1 or 2,
**characterised in that**
the outer cover layer (4a) is represented by a thermoplastic FRP cover layer, or **in that**
the outer cover layer (4a) and/or the outer skin (6) is/are represented by a pre-moulded sheet metal, in particular sheet aluminium, or a pre-moulded plastic part or by plastic sheeting or by an SMC layer or by a combination thereof, and/or **in that**
the outer skin (6) comprises an IMC layer, preferably of a polyurethane material, or at least includes a paint film.

4. Exterior module (1) according to one or more of claims 1 to 3,
**characterised in that**
the at least one thermoplastic FRP cover layer (4a, 4b) is made of organic sheeting comprising a reinforcing fibre arrangement (13) in a thermoplastic plastic matrix, wherein
- the reinforcing fibres comprise carbon fibres, glass fibres, aramid fibres, metal fibres or a combination thereof,
- the fibre arrangements (13) comprise an interlaid scrim, a woven fabric, a netting, a knitted fabric, and
- the thermoplastic matrix plastic material (14) is a polyamide, polypropylene, polycarbonate, polyphenyl sulphide, polyether ether-ketone, polyethylene terphthalate, polybutylene terphthalate or high-density polyethylene.

5. Exterior module (1) according to claim 3 or 4,
**characterised in that**
a layer (6') of thermoplastic matrix plastic material is provided on a side of the outer thermoplastic FRP cover layer (4b) which faces the outer skin (6).

6. Exterior module (1) according to one or more of claims 1 to 5,
**characterised in that**
the outer and the inner cover layers (4a, 4b) are joined in an edge region of the exterior module (1) by folding, welding or injection moulding.

7. Exterior module (1) according to one or more of claims 1 to 6,
**characterised in that**
the inner cover layer (4b) has openings and/or injection-moulded contours and/or edges of edge regions, holding and/or joining elements (2b, 9', 16) for joining the exterior module (1) to an interior module (2) of the modularly constructed housing component.

8. Modularly constructed housing component comprising an exterior module (1) with an exterior cladding (1') and an interior module (2),
**characterised in that**
the exterior module (1) is an exterior module (1) according to one or more of claims 1 to 7, which is joined to the interior module (2).

9. Housing component according to claim 8,
**characterised in that**
the exterior module (1) is joined to the interior module (2) by an adhesive seam (9), and/or
the inner cover layer (4b) has at the edge an insert-type shoulder (2b) for insertion into the interior module (2) for joining purposes, and/or
the inner cover layer (4b) has at the edge at least one tongue (9') and/or a pin (16) for engagement with a corresponding groove (9") or recess of the interior module (2).

10. Method for producing an exterior module (1) of a motor vehicle according to one or more of claims 1 to 8, using at tool (20) consisting of two tool halves (20a, 20b), wherein one tool half (20a) is provided for forming the cladding (1') on an outside of the exterior module (1) and one tool half (20b) is provided for forming an inside of the exterior module (1), and wherein the tool (20) is provided with a sprue system (21, 24),
the method comprising the steps of:
- pre-moulding the inner and outer cover layers (4a, 4b) in accordance with the inner and outer exterior module contours, at least the inner cover layer (4b) being represented by a thermoplastic FRP cover layer (4b),
- placing the pre-moulded cover layers (4a, 4b) in the corresponding tool halves (20a, 20b),
- securing the cover layers (4a, 4b) by generating a vacuum while they are placed in the tool halves (20a, 20b),
- closing the tool (20),
- injecting a foaming material between the cover layers (4a, 4b) through the sprue system (21, 24) of the tool (20) and forming the structural core (5),
- producing the outer skin (6) by partially opening the tool (20) and coating the outer cover layer (4a) by means of the sprue system (21,24),
- producing the reinforcing elements (7, 10, 11) on the inner cover layer (4b) or both on the inner cover layer (4b) and on the outer skin (6) of the outer cover layer (4a) by moulding-on ribs (7) with the thermoplastic matrix plastic material in the tool (20) by means of the sprue system (21, 24).

11. Method according to claim 10,
**characterised in that**
for pre-moulding the cover layers (4a, 4b), the cover layers (4a, 4b) are heated, in particular by means of infrared radiation, and held by grippers (30) of matching shape, the cover layers (4a, 4b) being held on the grippers (30) by generating a vacuum pressure.

## Revendications

1. Module extérieur (1) d'un véhicule automobile doté d'un revêtement extérieur (V) pour un composant de boîtier modulaire, **caractérisé en ce que** le module extérieur (1) présente une structure multicouche qui comprend une couche de revêtement intérieure (4b) et une couche de revêtement extérieure (4a), une paroi extérieure (6) qui forme le revêtement extérieur, étant disposée dessus, et un noyau (5) de structure fabriqué en un matériau à base de mousse entre la couche extérieure de revêtement (4a) et la couche intérieure de revêtement (4b), au moins la couche de revêtement intérieure (4b) étant une couche de revêtement thermoplastique en matière plastique renforcée par des fibres (couche de revêtement FVK) qui présente au moins sur le côté opposé à la couche de revêtement extérieur (4a) des éléments de renfort (7, 10, 11) constitués de nervures (7), **caractérisé en ce que** les nervures (7) sont en matériau de matrice synthétique thermoplastique et **en ce que** les éléments de renfort (7, 10, 11) sont des nervures moulées par injection sur la couche de revêtement intérieure (4b), le plastique d'injection des nervures (7) étant sélectionné à partir d'un plastique compatible avec le matériau de matrice synthétique thermoplastique de la couche de revêtement intérieure (4b) et est en particulier identique au matériau de matrice synthétique thermoplastique.

2. Module extérieur (1) selon la revendication 1, **caractérisé en ce que** le composant de boîtier est une porte modulaire ou un composant de revêtement d'un véhicule automobile ou d'un appareil, en particulier un appareil ménager, et le noyau (5) de structure est formé à partir d'une matière à base de mousse en polyuréthane et présente une épaisse variable ou constante.

3. Module extérieur (1) selon la revendication 1 ou 2, **caractérisé en ce que** la couche de revêtement extérieure (4a) est formée par une couche de revêtement FVK thermoplastique, ou **en ce que** la couche de revêtement extérieure (4a) et/ou la paroi extérieure (6) est/sont formées par une tôle métallique préformée, en particulier une tôle en aluminium, ou une partie en matière plastique préformée ou encore par une feuille en matière plastique ou une couche SMC ou leur combinaison, et/ou la paroi extérieure (6) comprend une couche IMC (6), de préférence en polyuréthane ou au moins comprend une couche de peinture.

4. Module extérieur (1) selon au moins l'une quelconque des revendications 1 à 3, **caractérisé en ce que** l'au moins une couche de revêtement FVK (4a, 4b) est formée à partir d'une tôle organique qui présente un agencement de fibres de renfort (13) dans un matériau de matrice synthétique thermoplastique (14),
- les fibres de renfort comprennent des fibres de carbone, des fibres de verre, des fibres d'aramide, des fibres métalliques ou leurs combinaisons,
- les agencements de fibres (13) comprennent un non-tissé, un tissu, un filet, un tissu à mailles, et
- le matériau de matrice synthétique thermoplastique (14) est un polyamide, polypropylène, polycarbonate, sulfure de polyphénylène, polyétheréthercétone, polytéréphtalate d'éthylène, polybutylène-téréphtalate, polyéthylène haute densité.

5. Module extérieur (1) selon au moins l'une quelconque des revendications 3 à 4, **caractérisé en ce que** sur le côté orienté vers la paroi extérieure (6) de la couche de revêtement FVK thermoplastique (4b) est disposée une couche (6') en matériau de matrice synthétique thermoplastique.

6. Module extérieur (1) selon au moins l'une quelconque des revendications 1 à 5, **caractérisé en ce que** la couche de revêtement extérieure et intérieure (4a, 4b) sont reliées sur une zone de bord du module extérieur (1) par sertissage, soudure ou enrobage.

7. Module extérieur (1) selon au moins l'une quelconque des revendications 1 à 6, **caractérisé en ce que** la couche de revêtement intérieure (4b) présente des passages et/ou des contours moulés par injection et/ou des arêtes de zones de bord, des éléments de retenue et/ou de liaison (2b, 9', 16) destinés à relier le module extérieur (1) à un module intérieur (2) du composant de boîtier modulaire.

8. Composant de boîtier modulaire doté d'un module extérieur (1) comportant un revêtement extérieur (1') et un module intérieur (2), **caractérisé en ce que** le module extérieur (1) est un module extérieur (1) selon l'au moins une des revendications 1 à 7, qui est relié au module intérieur (2).

9. Composant de boîtier selon la revendication 8, **caractérisé en ce que** la liaison entre le module extérieur (1) et le module intérieur s'effectue par un cordon de colle (9) et/ou la couche de revêtement intérieure (4b) destinée à la liaison sur le bord présente une pièce rapportée (2b) pouvant s'introduire dans le module intérieur (2) et/ou la couche de revêtement intérieure (4b) destinée à la liaison sur le bord présente au moins un ressort (9') et/ou une goupille (16) pour réception dans une rainure correspondante (9") ou un évidement du module intérieur (2).

10. Procédé de fabrication d'un module extérieur (1) d'un véhicule automobile selon au moins l'une quelconque des revendications 2 à 8, faisant appel à un outil (20) qui est composé de deux moitiés d'outil (20a, 20b), une moitié d'outil (20a) est destinée à former le revêtement (1') sur un côté extérieur du module extérieur (1) et une moitié d'outil (20b) étant destinée à former un côté intérieur du module extérieur (1) et l'outil (20) disposant d'un système de carotte (21, 24), comprenant les étapes consistant à :
- préformer les couches de revêtement intérieure et extérieure (4a, 4b) correspondant aux contours de module extérieur et intérieur, au moins la couche de revêtement intérieure (4b) étant préparée au moins à l'aide d'une couche de revêtement FVK thermoplastique (4b),
- insérer les couches de revêtement (4a, 4b) préformées dans les moitiés d'outil correspondantes (20a, 20b),
- fixer les couches de revêtement (4a, 4b) lors de leur insertion dans les moitiés d'outil (20a, 20b) par dépression,
- fermer l'outil (20),
- injecter un matériau formant de la mousse entre les couches de revêtement (4a, 4b) par le système de carotte (21, 24) de l'outil (20) et former le noyau de (5) de structure,
- produire la paroi extérieure (6) par l'ouverture partielle de l'outil (20) et revêtir la couche de revêtement extérieure (4a) au moyen du système de carotte (21, 24),
- produire les éléments de renfort (7, 10, 11) tant sur la couche de revêtement intérieure (4b) ou également sur la couche de revêtement intérieure (4b), que sur la paroi extérieure (6) sur la couche de revêtement extérieure (4a) par moulage par injection des nervures (7) au moyen du matériau de matrice synthétique thermoplastique dans l'outil (20) à l'aide du système de carotte (21, 24).

11. Procédé selon la revendication 10, **caractérisé en ce que** le préformage des couches de revêtement (4a, 4b) s'effectue par le chauffage en particulier au moyen d'un rayonnement infrarouge et par le maintien des couches de revêtement (4a, 4b) par des griffes (30) à forme adaptée, la retenue des couches de revêtement (4a, 4b) sur les griffes (30) s'effectue par la production d'une dépression.
